## Europäisches Patentamt
## European Patent Office
## Office européen des brevets

(19)

(11) Publication number: **0 151 390**
A2

(12)

# EUROPEAN PATENT APPLICATION

(21) Application number: 85100141.2

(22) Date of filing: 08.01.85

(51) Int. Cl.⁴: **B 29 B 9/06**
B 29 C 47/12

(30) Priority: 09.01.84 US 569201

(43) Date of publication of application:
14.08.85 Bulletin 85/33

(84) Designated Contracting States:
AT BE CH DE FR GB IT LI NL SE

(71) Applicant: UNION CARBIDE CORPORATION
Old Ridgebury Road
Danbury Connecticut 06817(US)

(72) Inventor: O'Shea, Ronald John
211 McKinley Avenue
Charleston, WVa 25314(US)

(72) Inventor: Farley, Richard Wayne
515 25th Street
Dunbar, WVa 25064(US)

(72) Inventor: Ashbaugh, William Goebel
622 24th Avenue
North Texas City Texas 77590(US)

(74) Representative: Barz, Peter, Dr. et al,
Patentanwälte Dr. V. Schmied-Kowarzik Dipl.-Ing. G.
Dannenberg Dr. P. Weinhold Dr. D. Gudel Dipl.-Ing. S.
Schubert Dr. P. Barz Siegfriedstrasse 8
D-8000 München 40(DE)

(54) Extrusion die head assembly for plastic pelletizers.

(57) An extrusion die head assembly for thermoplastic material pelletizers is disclosed having a body member and a mating, removable and selectively substitutable relatively small mass insert member in communication with the body member, the insert member having a selected plurality of metering capillary and communicating extrusion die passages positioned therein, the dimensions, number and positioning of the metering capillary passages being selected as required by the physical and rheological properties of the thermoplastic material being processed through said assembly.

EP 0 151 390 A2

./...

F I G. 1

- 1 -

EXTRUSION DIE HEAD ASSEMBLY
FOR PLASTIC PELLETIZERS

The present invention relates to an extrusion die head assembly for thermoplastic material pelletizers and, more particularly, such pelletizers of the submerged liquid strand cutting type.

Pelletizing apparatus of the submerged liquid strand cutting type was first disclosed in U.S. Patent No. 3,029,466 to A.W. Guill entitled "Liquid Phase Pelleter." As there disclosed, a stream of the molten thermoplastic material to be pelletized is passed through conduits of a heating and shaping member (die head assembly) and discharged as strands of molten material through die orifices at a submerged point in a body of cooling fluid (preferably water) which serves to quench the molten strands of thermoplastic material which are then cut to pellet lengths by rotating fly knives. The pellets so formed are collected at the surface of the liquid body.

Such prior apparatus employs a heating fluid passing through heat exchange conduits to heat the stream(s) of thermoplastic material.

The elements of the pelletizing apparatus are permanently bonded together, as by welding. The pelletizing apparatus has been employed to process any of the wide variety of thermoplastic materials into pelleted form. Examples of such materials include: polyethylene (high and low density), polypropylene, polystyrene, polyvinyl chloride, ABS terpolymer, nylon, polyester, polyurethane and

D-13,959

acrylics. Whereas such apparatus has been used to process thermoplastic materials having significantly different physical and rheological properties, all have been processed over the almost 30 years since the invention of the apparatus of the Guill patent without any consideration for the differences in such properties.

Accordingly, it is the prime object of the present invention to provide improved extrusion die head assembly apparatus for plastic pelletizers, wherein an improved uniformity is obtained in the processing of the molten thermoplastic stream and in the quality of the resulting pelleted materials, by taking into account the physical and rheological properties of the thermoplastic material being processed, e.g. melting point, melt viscosity, etc.

In accordance with the present invention, an extrusion die head assembly for thermoplastic material pelletizers is provided comprising a main body member having inlet supply conduit means for said thermoplastic material positioned therein and a mating, removable and selectively substitutable, insert plate member having tightly-sealed communicationwith said molten plastic conduit means of said body member, said insert plate member having a plurality of low pressure drop metering capillary and communicating extrusion die passages positioned therein and enclosed between and in thermal contact with heating fluid passages provided in said insert member the dimensions, number and positioning of said metering capillary passages being selected as required by the physical and rheological properties

D-13,959

of the thermoplastic material being processed through said assembly.

The provision of removable insert members from the die head assembly enables the employment of a wide variety of substitutable insert members each designed to provide the optimum number of capillary and die passages properly dimensioned for the specific thermoplastic material being processed. The materials flow rate through the capillary passages as well as the wall thicknesses and diameter of the passages and the numbers thereof may be varied to control the heat transfer from the heating fluid supply conduits to the material in the metering capillary passages without increasing the over-all pressure drop along the full axial length of the metering capillaries.

The quantity and geometry of dieplate extrusion passages is decided upon based upon consideration of the polymer properties such as viscosity, flow rate, melt and processing temperatures, energy required to extrude, elastic or resilient nature of the polymer additives present (carbon black, mica, peroxides, etc.) and the pelleting machine size.

Some considerations include:

(a) "long" capillaries produce "stable" pellets with commercially desirable small "swell" but extrusion pressures must be higher, thus requiring larger motors for given rates more power consumption and greater danger of melt fracture."

(b) Many extrusion passages wil lower the pressure drop in a die but will also reduce

D-13,959

extrudate velocity and can lead to instability in pelleting.

(c) More viscous polymers would be easier processed in large, short capillaries but can easily run into melt fracture problems, a condition wherein the extrudate surface becomes distorted and streaked, swell is uncontrolled, and the diameter of the extrudate is unmeasurable

(d) Less viscous plain base resins such as low density polyethylene, will expand rapidly when extruded and thus require many smaller passages vs. fewer and larger for compounds.

(e) Processing is largely viscosity related which, in turn, is non-newtonian for most polymers. The viscosity decreases substantially, with increased shear rate (i.e. extrusion rate). A Power law, relationship between viscosity and shear is generally accepted. For example, values of the Power Law constant may vary from 0.3 - 0.6 for polyethylene to 0.6 - 0.9 for nylon.

Fixed geometry (permanently constructed without insertability) die plates can handle only a narrow range of processing variables. A die with replaceable inserts of differing rheological extrusion patterns can handle a wide variety of processing conditions and polymers.

The figures of the drawing show a number of embodiments of the extrusion die head assembly apparatus of the invention. As there shown:

Fig. 1 is an exploded view of the body member, gasket member and removable insert plate member of the die head assembly embodiment of the invention;

D-13,959

Fig. 2 is a plan view of a base plate (main body) member of the assembly, showing the various fluid passages therein;

Fig. 3 is an inverted sectional view of the extrusion die head assembly of the invention, taken along the line 3-3 of Fig. 2 and showing the mated relationship of the main body member and the insert plate member;

Fig. 4 is an enlarged sectional view of a portion of an insert plate member embodying the invention showing its fitted relationship with the body member and a flat sealing gasket;

Fig. 5 is an enlarged sectional view of that portion of the discharge orifices of an insert plate of the type shown in Fig. 6 taken along the line 5-5;

Fig. 6 is an enlarged plan view of an alternate embodiment of insert plate having segmented zones of discharge orifices arranged in zones around the insert plate;

Fig. 7 is a plan view of a resilient gasket employable between the insert plate and base plate of the extrusion die head assembly having an alternate modification in which the discharge passages are located in six zones, as shown in the embodiment of Fig. 1 of the drawings; and

Fig. 8 is an enlarged sectional view of another alternate modification of a portion of an insert plate member and body member embodying the invention showing the relationship of the insert and body members using hollow or solid "O" ring or square ring gasketing means; and

Fig. 9 is an enlarged sectional view of still another alternate embodiment of the die head assembly of the invention.

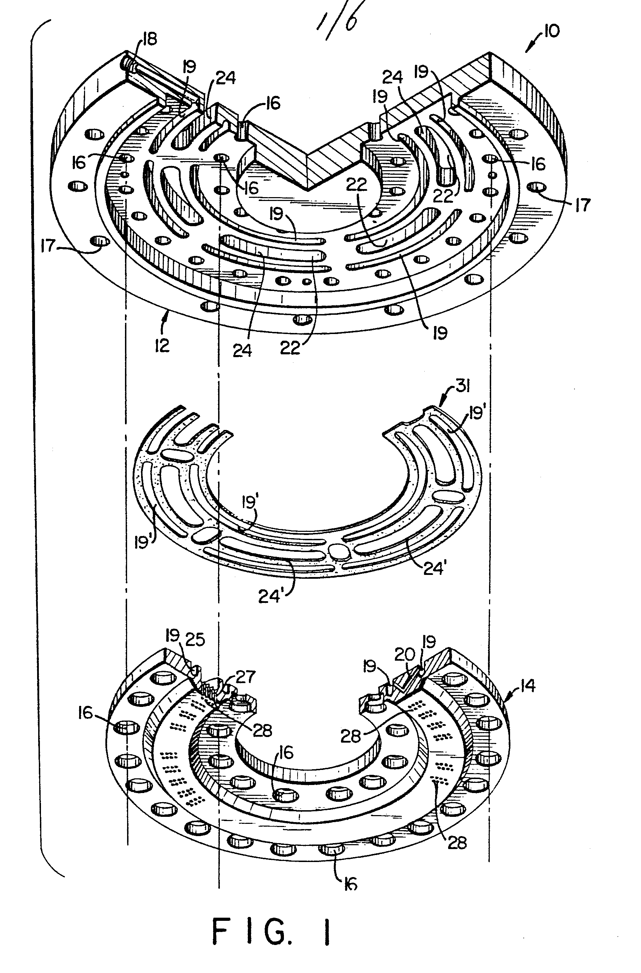

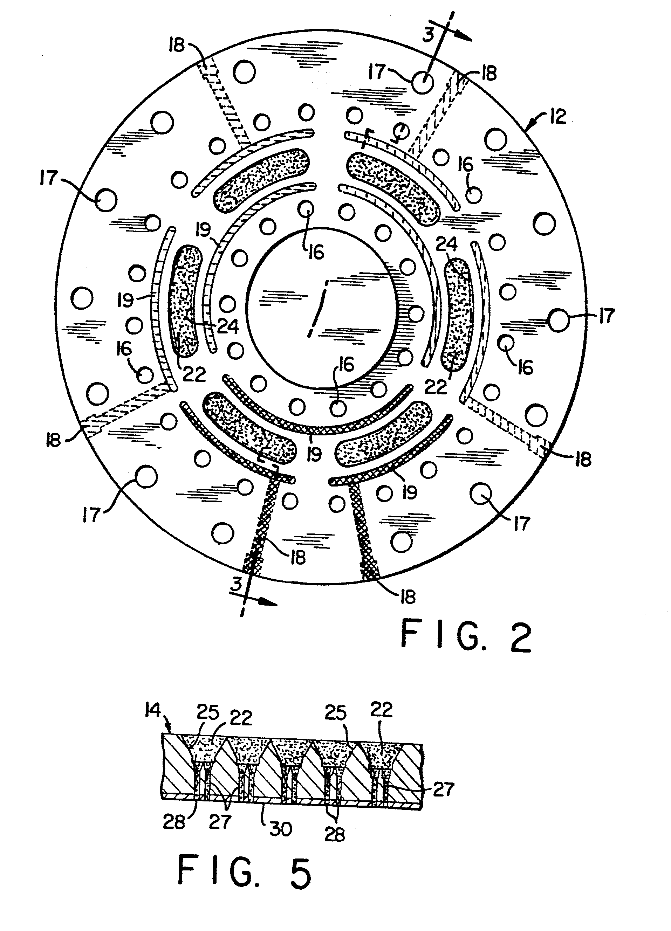

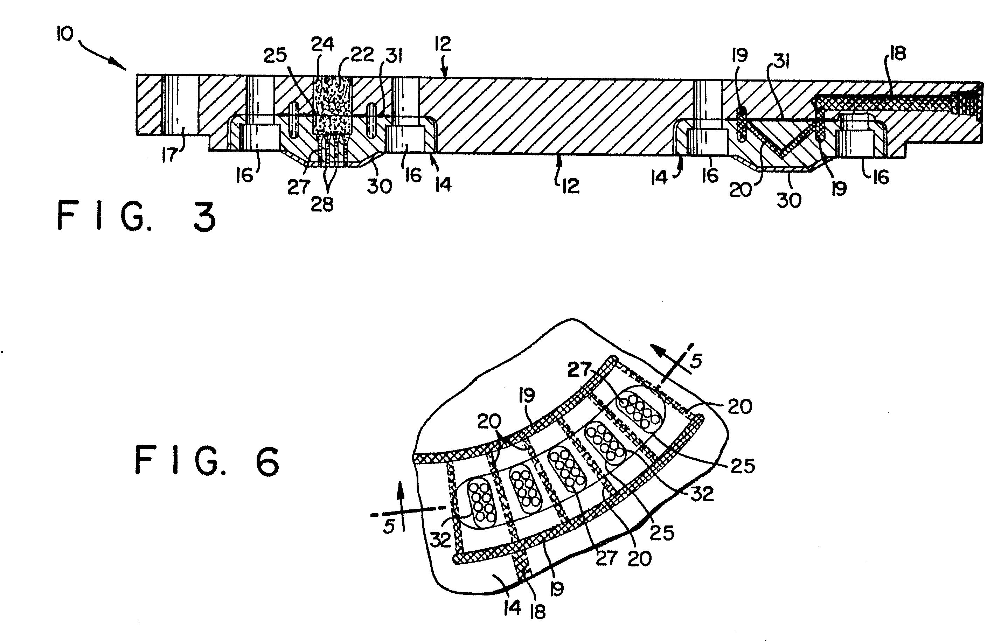

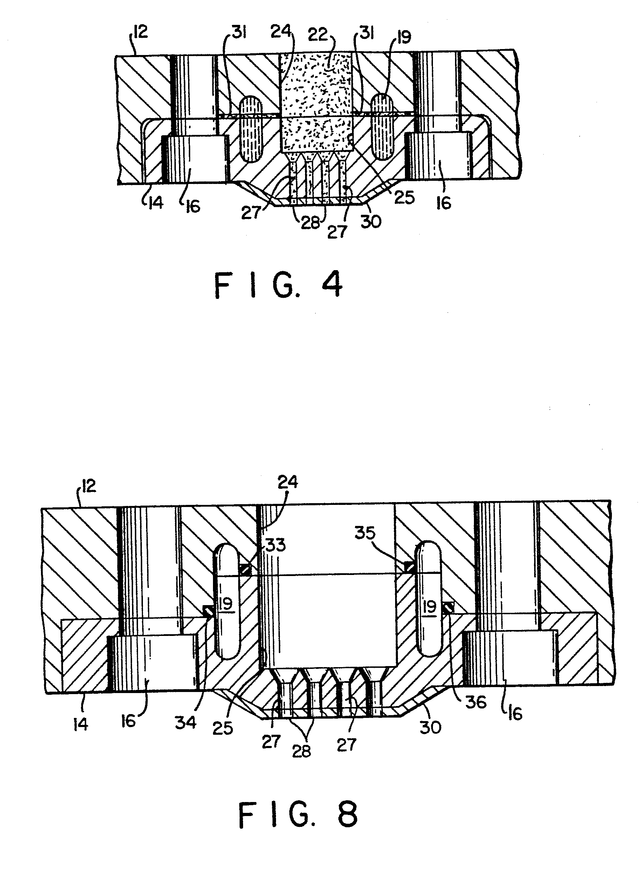

Referring specifically to the extrusion die head assembly 10 of the embodiment of Figs. 1-5 of the drawings, a body member 12 is provided having internal fluid conduits therein in communication with the internal fluid conduits of mating, removable and replaceable insert plate member 14, which is shown in Fig. 3 of the drawings. The sectional angle at which Fig. 3 is taken permits the showing of a section (left side of Fig. 3) of the insert plate member with both of two circles of bolt holes 16 and a section (right side of Fig. 3) showing the heating fluid passages 18. Bolts passing through holes 16 effect die head assembly as well as securing the assembly to the thermoplastic material extruder (not shown).

The heating fluid is, preferably, steam or heated oil. The inlet steam passages 18 communicate with the plurality of axial heating passages 19, and interconnecting heating passageways 20 which surround the centrally-positioned thermoplastic materials passages in the insert plate member.

The molten thermoplastic materials 22 being processed pass through passages 24 which registers with passages 25 of the insert plate member 14. This stream is subdivided into a pluraltiy of parallel streams each passing through capillary passages 27 which terminate in a die orifices 28 at the discharge end of the insert plate 14. The discharge orifices are positioned in a hard-surfaced

D-13,959

layer 30 (of tungsten carbide or the like) on the outer strand cutting surface of the insert member.

The heating fluid is preferably introduced through conduits 18 into the die head assembly through the body member and to the insert member in a plurality of zones and heating fluid passages 19 surrounding the thermoplastic materials passages 24 and 25.

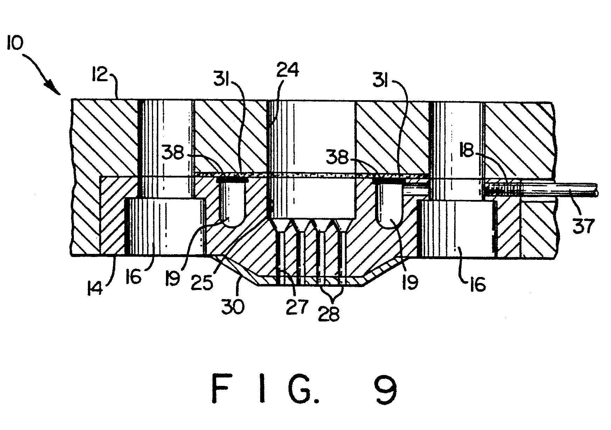

As shown in the embodiment of Fig. 3 of the drawings, the body member 12 and insert plate 14 are provided with a gasket 31 therebetween forming a seal around the heating fluid conduit 19 and preventing leakage between the thermoplastic material passages 24 and 25 and the heating fluid passages 19. Similarly, as shown in Fig. 8 of the drawings, four resilient "O-rings" 33, 34, 35 and 36 may alternatively provide sealing between the heating fluid and thermoplastic materials conduits.

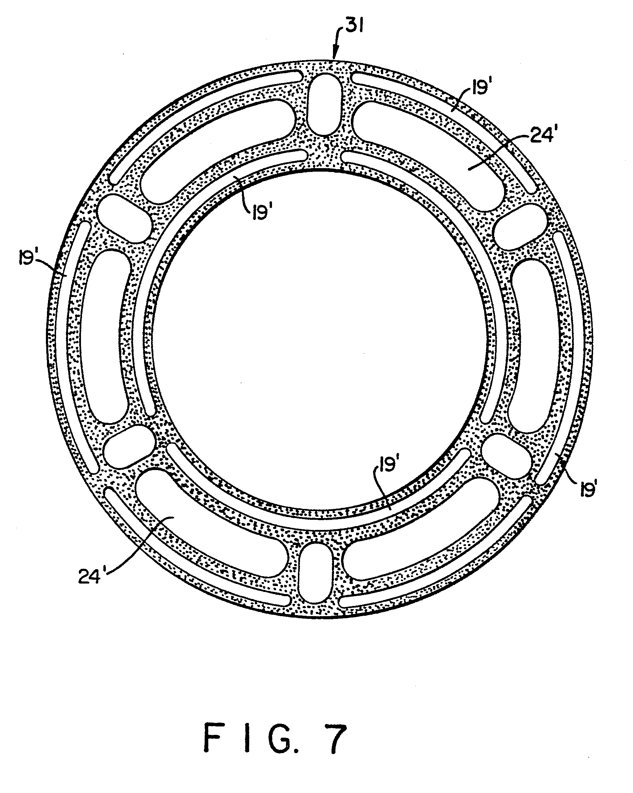

In the embodiment shown in Fig. 6 of the drawings, the zone 25 of the insert plate 14 comprises five groups 32 of capillary passages 27, eight capillary passages in each group.

As shown in Fig. 7 of the drawings, the gasket member 31 is provided of resilient material and shaped to be positioned between the body member 12 in the area of its contact with the inlet end of insert member 14. Holes are provided in the gasket member for the passage of both heating fluid and thermoplastic material, the former through passages 19 and the later through passages 24 and 25, such holes being assigned primed numerals equivalent to the numerals for the passages with which they register in the insert plate member 14.

D-13,959

The alternative embodiment of Fig. 9 employs a separable construction wherein the heating inlet fluid passage may be admitted directly into the insert member 14 instead of the body member 12 through use of intermediate short .lengths of pipe nipple placed into the insert member through clearance holes in the body member. Since the primary need for heating is to keep the polymer molten, the heating fluid is introduced directly into passage 18 through conduit 37. In this embodiment heating passages may be welded shut as at 38 and the gasket 31 serves only to seal off polymer material leakage.

In comparing the polymer processing of two common polyethylene resins, each on the same die plate having 484 capillaries, each 0.093 inches diameter and 0.5 inches length, the following is to be noted:

Example 1 - In product low density polyethylene power law constant (n) = 0.3:
      Polymer flow rate in pounds per hour-6,500.
      Pressure drop across die plate-300 psi.
      % swell-50%

Example 2 - High density polyethylene compound power law constant (n) = 0.5:
      Polymer flow rate in pounds per hour-2,000
      Pressure drop across die plate-1,200 psi
      % swell-25%

In practice, pressure drop equates to power consumption, thus use of two different die plate

D-13,959

inserts. Higher rates could be achieved using a larger capillary diameter (for example 0.125 inch) and/or using a greater number of capillaries. In such case, the pressure drop would be lower. To keep both pressure drops the same, it would be necessary in Example 2 to increase the diameter of the capillaries or their number.

Materials of construction of the assembly - Preferrably 17-4 or 15-5 precipitation-hardened stainless steels, although they can be made from any good commercial stainless steel. Hardenable facings are generally tungsten carbide.

Weight and dimensions of base member and insert member:

Weight for a small die plate

21 inches total O.D.

210 pounds total 43 pounds insert

Weight for a large die plate

36 inches total O.D.

1,140 pounds - total

253 pounds - insert

D-13,959

0151390

CLAIMS

1.    An extrusion die head assembly for
thermoplastic material pelletizers comprising a main
body member having inlet supply conduit means for
said thermoplatic material positioned therein and a
mating, removable and selectively substitutable,
insert plate member having tightly-sealed
communication with said molten plastic conduit means
of said body member, said insert plate member having
a plurality of low pressure drop metering capillary
and communicating extrusion die passages positioned
therein and enclosed between and in thermal contact
with heating fluid-passages provided in said insert
member the dimensions, number and positioning of
said metering capillary passages being selected as
required by the physical and rheological properties
of the thermoplastic material being processed
through said assembly.

2.    An extrusion die head assembly in
accordance with claim 1, wherein tightly-sealed
fluid communication between said body member and
said insert plate member is provided by easily
removed securing means and resilient gasketing means
provided between the mating faces.

3.    An extrusion die head assembly for
thermoplastic material pelletizers comprising a main
body member having inlet supply conduit means for
said thermoplastic material and heating fluid
positioned therein and a mating, removable and
selectively substitutable insert plate member having

D-13,959

a plurality of low pressure drop metering capillary
and communicating extrusion die passages positioned
therein and enclosed between and in thermal contact
with heating fluid passages provided in said insert
member, the dimensions, number and positioning of
said metering capillary passages being selected as
required by the physical and rheological properties
of the thermoplastic material being processed
through said assembly.

4.     An extrusion die head assembly in
accordance with claim 3, wherein tightly-sealed
fluid communication between said body member and
said insert plate member is provided by easily
removed securing means and resilient gasketing means
provided between the mating faces.

5.     An extrusion die head assembly for
thermoplastic material pelletizers comprising a main
body member having inlet supply conduit means for
said thermoplastic material positioned therein and a
mating, removable and selectively substitutable,
insert plate member having tightly-sealed
communication with said molten plastic conduit means
of said body member, said insert plate member having
a plurality of low pressure drop metering capillary
and communicating extrusion die passages positioned
therein and enclosed between and in thermal contact
with heating fluid passages for supplying heating
fluid directly to said insert member, the
dimensions, number and positioning of said metering
capillary passages being selected as required by the
physical and rheological properties of the

D-13,959

thermoplastic material being processed through said assembly.

6. An extrusion die head assembly in accordance with claim 5, wherein tightly-sealed fluid communication between said body member and said insert plate member is provided by easily removed securing means and resilient gasketing means provided between the mating faces.

D-13,959

F I G. I

FIG. 2

FIG. 5

FIG. 3

FIG. 6

0151390

0151390

4/6

F I G. 4

F I G. 8

F I G. 7

F I G.  9